# EUROPÄISCHE PATENTSCHRIFT

(11) **EP 1 046 588 B1**
(45) Veröffentlichungstag und Bekanntmachung des Hinweises auf die Patenterteilung: **19.11.2003**
(21) Anmeldenummer: 00101910.8
(22) Anmeldetag: 01.02.2000
(51) Int. Cl.: B65D 6/14, B65D 65/40, B65D 6/00

(54) **Kofferartiger Behälter zum Transport von hochwertigen Gütern**
Case-like container for transporting valuable objects
Conteneur de type valise pour le transport d'objets de valeur

(30) Priorität: 19.04.1999 DE 29906951 U
(43) Veröffentlichungstag der Anmeldung: 25.10.2000
(73) Patentinhaber: Hucker, André, 22177 Hamburg (DE); Ibendorf, Hans-Jörg, 22175 Hamburg (DE)
(72) Erfinder: Hucker, André, 22177 Hamburg (DE); Ibendorf, Hans-Jörg, 22175 Hamburg (DE)
(74) Vertreter: Patentanwälte Hauck, Graalfs, Wehnert, Döring, Siemons, Schildberg

(56) Entgegenhaltungen:
- WO-A-92/15507
- GB-A- 2 002 282
- US-A- 3 938 630
- DOMINICK ROSATO: "ROSATO'S PLASTICS ENCYCLOPEDIA AND DICTIONARY", 1993, HANSER, MUNICH

## Beschreibung

Die Erfindung bezieht sich auf einen kofferartigen Behälter (Flightcase) zum Transport hochwertiger Güter nach dem Oberbegriff des Anspruchs 1.

Es ist bekannt, Ausrüstungsgegenstände, Musikinstrumente, Werkzeuge u.ä., die an wechselnden Orten benötigt werden, mit Spezialkoffern oder -behältern zu transportieren. Diese Behälter (auch Flightcases genannt) sind äußerst stabil und geeignet, den Inhalt gegen äußere mechanische Beeinträchtigungen wirksam zu schützen.

Es ist bekannt, derartige Behälter aus Sperrholzplatten zu fertigen, die an den Kanten durch entsprechende Kantenverbindungen miteinander verbunden sind. Nachteilig bei der Verwendung von Sperrholzplatten ist jedoch das relativ hohe Gewicht und die Fähigkeit, Feuchtigkeit aufzunehmen.

Aus WO92/15507 A ist ein Behälter bekannt geworden mit einem Korpus und einem Deckel, die aus Sandwichplatten aufgebaut sind. Eine mittlere Schicht besteht aus Polyurethanschaum, und eine innere und eine äußere Schicht sind mit der mittleren Schicht verbunden, wobei die äußere Schicht aus ABS besteht.

Der Erfindung liegt die Aufgabe zugrunde, einen kofferartigen Behälter (Flightcase) zum Transport hochwertiger, gegen äußere Einflüsse zu schützende Güter zu schaffen, der relativ leicht gebaut ist, gleichwohl den Inhalt gegen Erschütterungen und Stöße wirksam sichert und dessen Wände auch bei großen Belastungen nicht brechen oder reißen und dessen Material darüber hinaus keine Feuchtigkeit aufnimmt.

Dieses Aufgabe wird durch die Merkmale des Patentanspruchs 1 gelöst

Bei dem erfindungsgemäßen kofferartigen Behälter sind, wie an sich bekannt, die Wände bzw. der Boden und der Deckel aus Sandwichplatten aufgebaut. Die Sandwichplatten haben eine mittlere Schicht aus Polyurethanschaum, in einer Dicke von 6 bis 12 mm. Auf beiden Seiten der Schaumstoffschicht befindet sich eine Schicht aus ABS (Acrylnitril-Butadien-Styrol-Copolymer). Die äußere Schicht weist eine Dicke von 2 bis 2,5 mm auf, während die innere Schicht eine Dicke von 1 bis 1,5 mm hat. Äußere und innere Schichten werden mit Hilfe eines PU-Klebers und der mittleren Schicht verbunden. PU ist die Kurzbezeichnung für ein Polyurethan-Elastomer.

Zur Vermeidung einer Vorbehandlung zur Haftungsverbesserung mittels Primern werden die Klebeflächen durch eine sog. "Korona-Beschichtung" vorbehandelt werden. Dies ist ein in der Drucktechnik angewendetes Verfahren, z. B. zum Bedrucken von Kunststoff-Folien auf elektrostatischem Wege.

Die Außenseiten der äußeren Schicht nach einer Ausgestaltung der Erfindung genarbt, was mittels Prägewalzen beim Extrudieren erfolgt.

Die innere der beiden äußeren Schichten können auch ein ABS-Regenerat sein, was den Herstellungsaufwand naturgemäß verringert.

Ein kofferartiger Behälter mit den Merkmalen der Erfindung weist erhebliche Vorteile auf. Neben dem relativ geringen Gewicht werden schlagzähe und farbechte Deckschichten erhalten. Der verwendete PU-Kleber ist beständig, so daß die Schichten der Sandwichplatten dauerhaft miteinander verbunden sind, insbesondere durch vorherige die Oberflächenvorbereitung durch eine Korona-Behandlung. Eine Beeinträchtigung durch Wasser, auch über einen längeren Zeitraum, besteht nicht. Ferner lassen sich Sandwichplatten der angegebenen Art relativ präzise herstellen, was für die Anwendung bei kofferartigen Behältern wesentlich ist. Eine nachträgliche Bearbeitung kann daher in Fortfall kommen.

Die Verbindung der Sandwichplatten zum kofferartigen Behälter erfolgt erfindungsgemäß mit Hilfe von Kantenprofilen, die als Strangpressprofile aus Aluminium geformt sind.

Ein Ausführungsbeispiel der Erfindung wird nachfolgend anhand von Zeichnungen näher erläutert.
- Fig. 1: zeigt schematisch und perspektivisch einen kofferartigen Behälter nach der Erfindung.
- Fig. 2: zeigt vergrößert einen Schnitt durch eine Platte des Behälters nach Fig. 1.
- Fig. 3: zeigt eine Eckverbindung zwischen zwei Platten im Bereich von Kreis 3 nach Fig. 1.
- Fig. 4: zeigt das Zusammenwirken von zwei Kanten von Deckel und Korpus des Behälters nach Fig. 1.

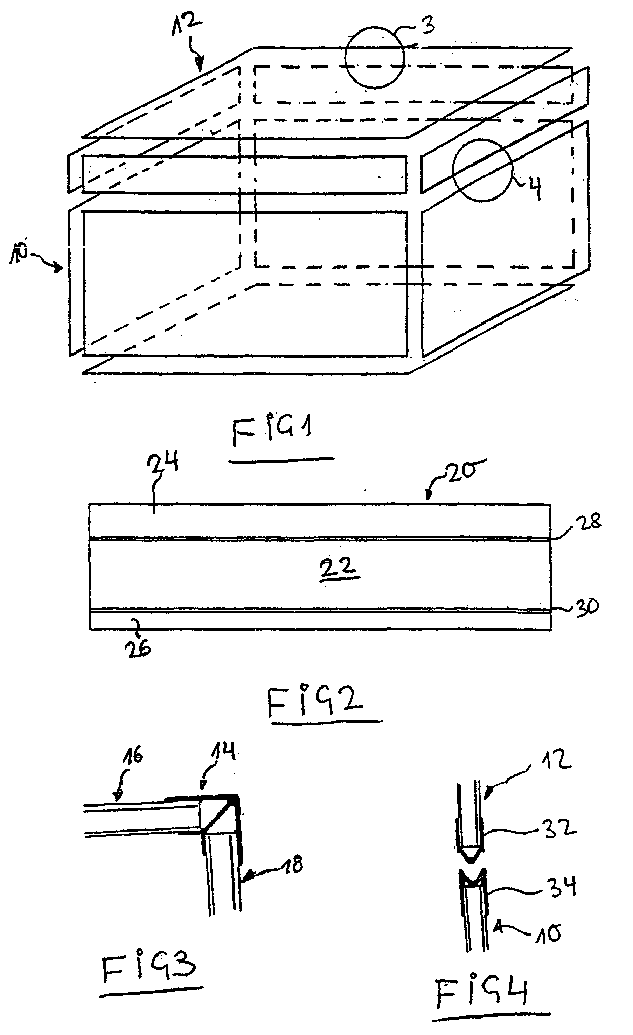

Der in Fig. 1 angedeutete Behälter besteht aus einem Korpus 10 und einem Deckel 12. Der Deckel 12 wird über nicht gezeigte geeignete Scharniere am Korpus 10 angelenkt. Sowohl Korpus 10 als auch Deckel 12 sind aus einzelnen Platten zusammengesetzt, welche an den anstoßenden Kanten über geeignete Profile miteinander verbunden sind. Ein solches Kantenprofil ist in Fig. 3 bei 14 gezeigt. Es ist aus Aluminium im Strangpreßverfahren hergestellt und ermöglicht das Einstecken von Platten 16, 18 im rechten Winkel zueinander. Derartige Profile 14 sind jedoch an sich bekannt. Die Befestigung der Platten 16, 18 im Verbindungsprofil 14 kann zum Beispiel durch Nieten, Schrauben, Kleben oder auf sonstige Weise erfolgen.

Jede der Platten des Behälters nach Fig. 1 ist in Sandwichbauweise hergestellt, wie sich aus Fig. 2 ergibt. In Fig. 2 ist eine Platte 20 angedeutet, die aus einer mittleren Schicht 22 aus Polyurethanschaum besteht und zwei Deckschichten 24, 26 aus ABS (Acrylnitril-Butadien-Styrol-Copolymer). Die Schicht 24 bildet die äußere Schicht und ist dicker als die innere Schicht 26. Die Schicht 24 hat zum Beispiel eine Dicke von 2 bis 2,5 mm. Die innere Schicht 26 hat zum Beispiel eine Dicke von 1 bis 1,5 mm. Die mittlere Schicht 22 hat zum Beispiel eine Dicke von 6 bis 12 mm. Die Verbindung der Schichten 24, 26 mit der mittleren Schicht 22 erfolgt durch eine Schicht 28 bzw. 30 aus einem Polyurethanelastomerkleber.

In Fig. 4 ist die untere Kante des Deckels 12 angedeutet, die ein Kantenprofil 32 aufweist, das mit einem komplementären Kantenprofil 34 des Korpus 10 zusammenwirkt, um eine wirksame Abdichtung zu erhalten und eine Sicherung gegen seitliche Verlagerung.

Der Deckel 12 kann mit Hilfe von geeigneten Beschlägen im geschlossenen Zustand mit dem Korpus 10 verriegelt werden. Dies ist an sich bekannt und soll daher nicht näher beschrieben werden.

## Patentansprüche

1. Kofferartiger Behälter (Flightcase) zum Transport hochwertiger, gegen äußere Einflüsse zu sichernder Güter mit einem Korpus und einem Deckel, die aus Sandwichplatten (20) aufgebaut sind, wobei eine mittlere Schicht (22) aus Polyurethanschaum und eine innere und eine äußere Schicht (26, 24) geringerer Dicke vorgesehen sind und wobei die äußere Schicht (24) aus ABS besteht und mittels Kleber mit der mittleren Schicht (22) verklebt ist, **dadurch gekennzeichnet, daß** die mittlere Schicht (22) etwa 6 bis 12 mm dick ist, die äußere Schicht (24) etwa 2 bis 2,5 mm dick ist und die innere Schicht etwa 1 bis 1,5 mm dick ist, die innere Schicht (26) ebenfalls aus ABS oder aus einem ABS-Generat besteht und daß innere und aüßere Schicht mittels PU-Kleber mit der mittleren Schicht (22) verklebt sind, wobei die Klebeflächen eine Coronabehandlung aufweisen, benachbarte Sandwichplatten (20) über ein Kantenprofil (14) aus Aluminiumstrangpreßprofilen verbunden sind, die ein Einstecken der Plattenkanten im rechten Winkel ermöglichen und die untere Kante des Deckels (12) ein Kantenprofil (32) aufweist, das mit einem komplementären Kantenprofil (34) des Korpus zusammenwirkt derart, daß eine wirksame Abdichtung und Sicherung gegen seitliche Verlagerung erhalten wird.

2. Behälter nach Anspruch 1, **dadurch gekennzeichnet, daß** die Außenseite der äußeren und/oder inneren Schicht (24, 26) eine genarbte durch Prägewalzen beim Extrudieren erzeugte Struktur aufweist.

## Claims

1. A case-like container (flight case) for the transport of qualified goods to be secured against external influences, comprising a body and a cover which are structured of sandwich plates (20), the sandwich plates having a intermediate layer (22) of polyurethane foam and an inner and an outer layer (26, 24) of smaller thickness, with the outer layer (24) consisting of ABS and being adhered to the intermediate layer (22) by an adhesive, **characterized in that** the intermediate layer (22) has a thickness of 6 to 12 mm, the outer layer (24) has a thickness of 2 to 2.5 mm and the inner layer has a thickness of 1 to 1.5 mm, with the inner layer (26) being also of ABS or an ABS product and is adhered to the intermediate layer (22) that inner and outer layer are adhered to the intermediate layer (22) by means of a PU-adhesive, with the adhered surfaces comprise a coronar treatment, **in that** further adjacent sandwich plates (20) are connected through an edge profile (14) of extruded aluminum profiles which allow an insertion of the edges of the plates rectangularly, and the lower edge of the cover (12) has an edge profile (32) which coacts with a complementary edge profile (34) of the body such that an effective sealing and safety against lateral movement is achieved.

2. The container of claim 1, characterized the that the outer surface of the outer and/or inner layer (24, 26) has a grained structure generated by embossing rolls during extrusion.

## Revendications

1. Récipient en forme de valise (flightcase) pour la transportation de biens de haute valeur à préserver contre des influences extérieures, avec un corps et un couvercle, construites par des feuilles en sandwich (20), étant pourvu une couche moyenne (22) d'écume de polyuréthane et des couches intérieures et extérieures (26, 24) d'une épaisseur plus faible, et la couche extérieure (24) étant constituée d'ABS et étant conglutinée avec de la colle avec la couche moyenne, **caractérisé en ce que** la couche moyenne (22) est épaisse de 6 à 12 mm environ, la couche extérieure (24) est épaisse de 2 à 2,5 mm environ, et la couche intérieure est épaisse de 1 à 1,5 mm environ, et que la couche intérieure (26) est également constituée d'ABS ou un dérivé d'ABS et que la couche intérieure et la couche extérieure sont conglutinées avec de la colle de polyuréthane avec la couche moyenne (22), les surfaces de collage présentant un traitement corona, des feuilles de sandwich (20) voisins sont reliées entre eux-mêmes par un profil d'arête de profils extrudés d'aluminium (14) qui permettent un enfichement des arêtes de feuille dans l'angle droit, et que l'arête par dessous du couvercle (12) présente un profil d'arête (32) coopérant avec un profil d'arête complémentaire (34) du corps de manière qu'un étanchement et une préservation contre un déplacement latéral effectifs sont obtenus.

2. Récipient selon la revendication 1, **caractérisé en ce que** le côté extérieur de la couche extérieure et/ou la couche intérieure (24, 26) présente une structure grainée, produite par des cylindres de gaufrage pendant l'extrusion.
